# EUROPEAN PATENT APPLICATION

(11) **EP 2 134 094 A1**
(43) Date of publication of application: **16.12.2009**
(21) Application number: 08305262.1
(22) Date of filing: 13.06.2008
(51) Int. Cl.: H04N 7/24, H04N 7/173

(54) **Method and system for performing transactions on multimedia streams being produced over a chain of contributing producers**

(71) Applicant: Alcatel Lucent, 75008 Paris (FR)
(72) Inventor: Dobbelaere, Philippe, 2520 Broechem (BE); Damas, Florian, 2018 Antwerpen (BE)
(74) Representative: D'Halleweyn, Nele Veerle Trees Gertrudis

(57) **Abstract**

Method for performing transactions on multimedia streams being produced over a chain of contributing producers in a ICT network environment, wherein for every transaction from one party to another party a target multimedia stream is generated with a number of contributing streams, wherein for every intended transaction of a target multimedia stream digital transaction data for said transaction is generated and associated with the target multimedia stream, wherein the digital transaction data of every transaction is managed centrally in the ICT network environment so that the chain of contributing producers can be traced.

## Description

The present invention generally relates to a method and a system for performing transactions on multimedia streams being produced over a chain of contributing producers, to a transaction preparation module and to a central management module for managing the transactions.

One of the major ICT trends is that the number of players in the Internet economy is exponentially rising: Youtube, Flickr, etc, having as a consequence that everyone can generate multimedia content which could be target of a sale. Also, the reuse and repackaging of existing multimedia content by non-professional players could potentially generate a lot of revenue, if only there was a mechanism to ensure that the involved parties were correctly compensated for their effort. At present a system being able to ensure fair payment is completely non-existing.
The main challenges to be tackled are defining a mechanism that allows discovery of which parties have contributed to a final multimedia stream, together with what could be called a broker system where consumers and producers can exchange multimedia content, under clear assumptions about how the content can be legally used, further being able to guarantee that the transactions of multimedia content result in appropriate payments to the parties that have contributed to the content under sale.

With existing technology data streams can be watermarked, but there is no framework available which allows inspection of multimedia content as delivered down the value chain with the purpose of checking the enclosed watermarks. Further there exist auction platforms similar to ebay, but these are hardly specific enough to address multimedia transactions.

The object of the invention is to provide a system and a method according to the preamble, allowing a reliable control of the transactions taking place down a chain of producers contributing to a multimedia stream.

To reach this object the method according to the invention for performing transactions on multimedia streams being produced over a chain of contributing producers in a ICT network environment, wherein for every transaction from one party to another party a target multimedia stream is generated with a number of contributing streams, is distinguished in that for every intended transaction of a target multimedia stream digital transaction data for said transaction is generated and associated with the target multimedia stream, wherein the digital transaction data of every transaction is managed centrally in the ICT network environment so that the chain of contributing producers can be traced.

In other words every multimedia transaction is accompanied by transaction data which is managed centrally so that the chain of transaction can be perfectly controlled. Transaction data is preferably unique, and typically takes the form of a certificate, and typically states the party delivering the multimedia stream, the party receiving the stream, the usage rights attached to the stream and the revenue mechanism to be invoked on resale of (part of) the stream.

According to a preferred embodiment, whenever a party processing source streams acquired from other parties wants to enter a transaction with the resulting or target stream, it has to deliver the original certificates of the source streams used in the processing to a central authority, which will issue a suitable certificate to allow the transaction on the resulting stream. By this process, the parties involved in the production of the source streams can be further informed of the transaction on the resulting streams, and any revenue deals that were made can be put to effect. In that way a fair settlement for all contributors is obtained so that a fair revenue mechanism in a prosumer ecosystem can be built.

According to a possible embodiment the transaction data of the target multimedia stream further comprises the respective transaction data of the contributing streams. However, it is also possible to maintain a central database accessible by the central authority for storing the certificates for all the transactions so that the chain can be reconstructed by the central authority.

According to a preferred embodiment a watermark is added for every transaction. A watermarking mechanism will allow discovery (on a sampling basis) of resulting streams where the processing party did not deliver the respective certificates of the source streams, hence protecting the mechanism from fraud.

According to a further developed embodiment the respective digital watermarks and transaction data of the contributing streams are verified, and the producers of the contributing streams are informed accordingly. In that way fraud is reduced significantly.

Advantageously, the central authority managing the certificates can coincide with a publishing and brokerage functionality for multimedia content.

The invention also relates to a transaction preparation module according to claim 8 and to a central management module according to claim 12.

The invention further relates to a system for performing transactions on multimedia streams being produced over a chain of contributing producers in an ICT network environment, comprising:
- a transaction preparation module for preparing for every transaction a target multimedia stream from a number of contributing streams, said module being adapted for generating digital transaction data and for associating said digital transaction data with said target multimedia stream;
- a central authority comprising one or more servers, said central authority being adapted for managing the digital transaction data of every transaction so that the chain of contributing producers can be traced.

Preferably the transaction preparation module is further adapted for generating transaction data including at least user right data specifying the rights of using the target multimedia stream in subsequent transactions, and typically also an identifier of said one party, an identifier of the target multimedia stream, and an identifier of said other party. In that way the central authority can easily reproduce the complete chain from the original authors via the processors to the consumer, wherein the rights can be verified.

Advantageously the central authority is further adapted for ensuring that the producers of the contributing streams are paid as specified in the respective transaction data of the contributing streams.

According to a further developed embodiment the transaction preparation module is further adapted to include for every transaction of a target multimedia stream from one party to another party a watermark identifying said one party in the target multimedia stream. This allows for very advanced verification mechanisms controlling every transaction in the chain as will explained in detail with reference to the drawings.

Preferably the central management module is further adapted for verifying the respective digital watermarks and transaction data of every contributing stream, and for informing the producers of the contributing streams accordingly.

According to a possible embodiment the transaction preparation module is further adapted for generating digital transaction data for the target stream comprising the respective digital transaction data from the number of contributing streams.

Further advantageous embodiments are disclosed in the dependent claims.

The accompanying drawings are used to illustrate presently preferred non-limiting exemplary embodiments of the present invention. The above and other advantages features and objects of the invention will become more apparent and the invention will be better understood from the following detailed description when read in conjunction with the accompanying drawings in which:
- Figure 1 shows a diagram for illustrating an embodiment of the method of the invention;
- Figure 2 shows a diagram for illustrating the broker functionality of an embodiment of the method of the invention;
- Figure 3 shows a diagram for illustrating the verifier functionality of an embodiment of the method of the invention;
- Figure 4 shows a diagram for illustrating the matcher functionality of an embodiment of the method of the invention;
- Figure 5 is a flowchart for illustrating an embodiment of the method of the invention.

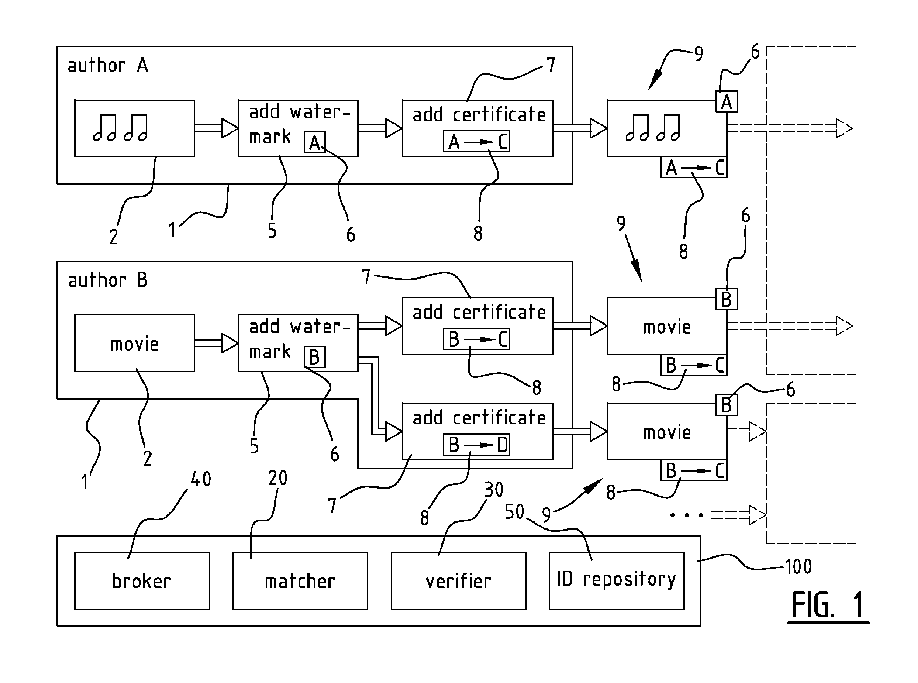

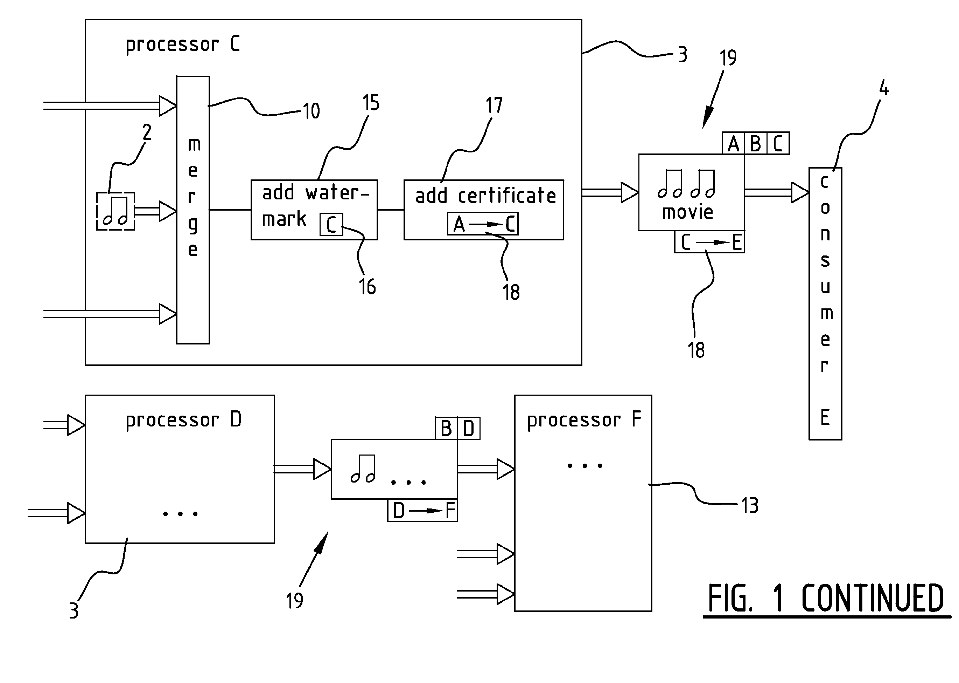

The diagram of figure 1 illustrates schematically two authors 1 (author A and author B) producing original content 2. The authors can sell the content in a transaction to processors 3 further treating the content (e.g. merging different contents, adding new content, cutting, transforming different parts of content, etc) and providing the resulting content in a transaction to consumers 4 or to further processors 13. For the transactions between an author 1 and a processor 3 a watermark 6 of the author is added in block 5, and next a certificate 8 with transaction data is generated and added to the content in step 7 to output certified, watermarked content 9 which can be used in further transactions between the processors 3 and a consumer 4 or further processor 13. For such a further transaction again a watermark 16 is added in a block 15 and a certificate is generated and added in block 17, and the resulting certified, watermarked content 19 is outputted to a consumer 4 or further processor 13.

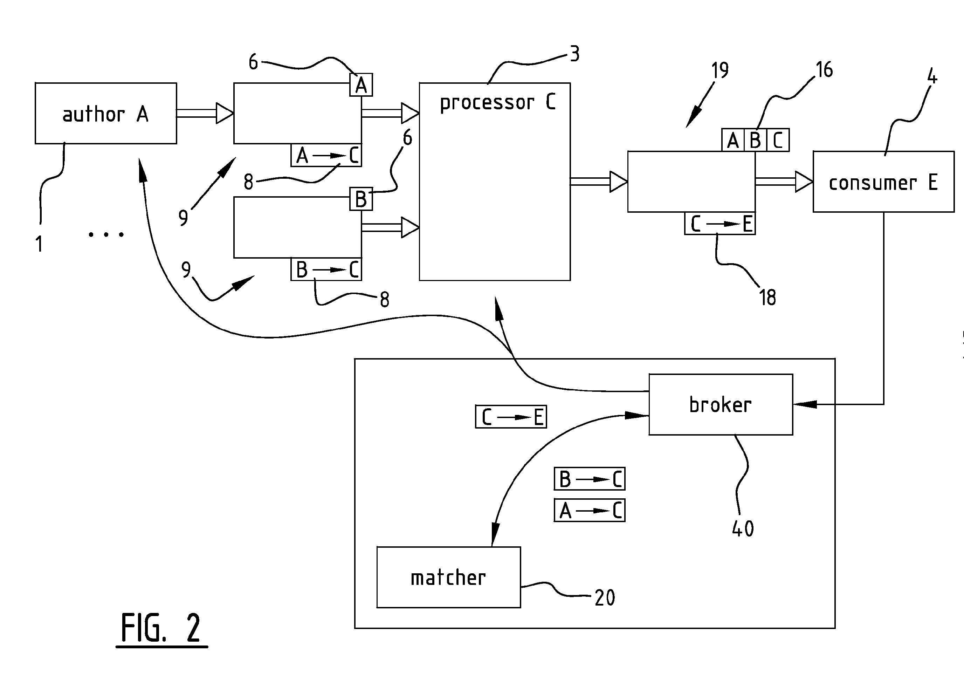

The transactions are further managed centrally by a central authority 100 which comprises in the present embodiment a broker component 40, a matcher component 20, a verifier component 30 and an ID repository 50. The function of those components will be further elucidated with reference to figures 2-4.

Preferably the used watermarks 6, 16 have at least a number of the following functionalities:
- a blind detector function, wherein watermarks can be extracted without the need for the original unmodified multimedia stream, typically using a correlation mechanism, see for example US2003/0099373;
- an advanced identification function allowing to identify the original source and any intermediate processors of a piece of the multimedia stream;
- a unique ID function wherein the watermarking is based on a unique ID which identifies the author/processing party;
- a multiple watermarking function allowing multiple watermarks on the same stream, almost not influencing the detection;
- an efficient single watermark function, wherein e.g. pseudo-noise sequences, hidden in the multimedia stream are linearly superposed.
The watermarking method is preferably robust, surviving typical stream transformations like cut, rotate, enlarge, reduce, color change, pitch change, amplitude change, etc. According to preferred embodiment of the method of the invention, every source/author or processing party adds its unique ID to the multimedia stream before selling it to other parties.

A suitable watermarking technique could e.g. be a combination of the technique disclosed in US 5,930,369 and the technique disclosed in US 6,934,403, which patent specifications are included herein by reference. According to this combination a watermark is inserted into domains of the original image, wherein wavelet transforms are used so that watermarks can be extracted without needing the original data and so that successive watermarking is possible.

According to a preferred embodiment a certificate corresponds to a billable transaction on the multimedia stream, wherein the transaction is concluded with the help of a multimedia broker component of a central authority, as will be explained in detail below, with reference to figure 2.

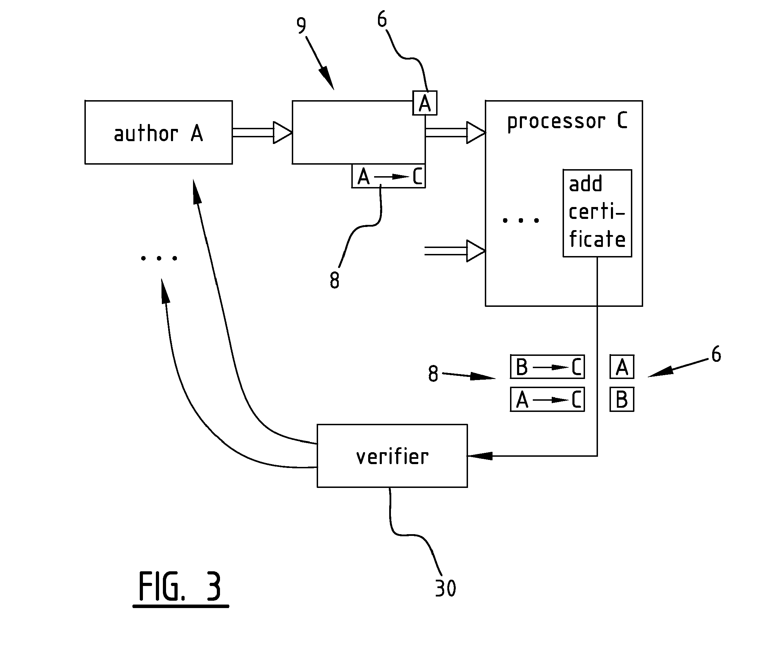

The transaction data in a certificate should typically identify:
- the source (i.e. the original author or the last processor, depending on where in the chain the transaction takes place) of the stream,
- the stream itself,
- the destination of the stream, and
- the usage rights which may be derived from the transaction.
Further each certificate should preferably be unique so that if a processor does the same transaction twice, the certificates are different.
Further, it is preferable to detect watermarks during the "add certificate" operation performed in blocks 7 and 17, and to report back to the verifier component 30 of the server, see the description below referring to figure 3.

According to a preferred embodiment the certificate is digitally signed by the source (or last processor) of the stream.

The usage rights can include amongst others:
- a "mode_render_1_quality" right, defined as a right of the final user to render the stream in the prescribed quality (dimension, BW, etc);
- a "mode_resell_1" right, defined as a right to process and sell exactly one copy further down the chain;
- a "mode_resell_N" right, defined as a right to process and sell up to N copies further down the chain;
- a "mode_resell_infinite" right, defined as a right to process and sell an unlimited number of copies further down the chain;
- a "mode_private_use" right, defined as a right to use the multimedia stream for non-profit, but no resell rights;
- a "mode_resell_until_date" right, defined as a right to resell the stream up to a specified date;
- a "mode_resell_region" right, defined as a right to resell the stream in a particular region (e.g. network, geo region, domain, etc)

Note that this is a non exhaustive list and that the skilled person will realize that other modes can be defined in the list of usage rights. Usage rights could for example further include required information about royalties to be paid when this stream is resold by the party mentioned in the certificate.

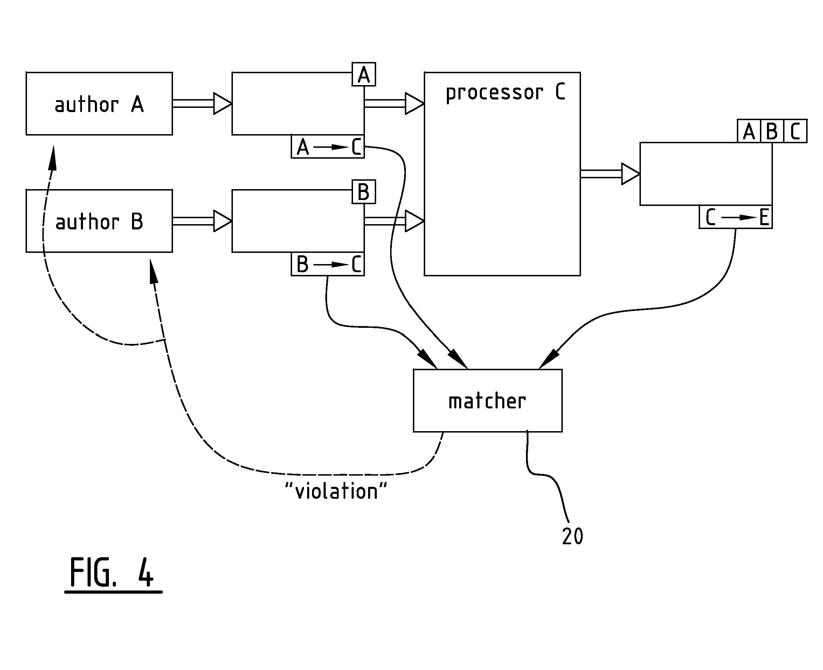

For each transaction, the multimedia broker component 40 of the central authority 100 receives the associated certificate and forwards the usage rights to the certificate matcher component 20, see figure 2. When the processor 3 uses the source streams 9 to create a target stream 19 and sells the resulting target stream 19 accompanied by its target certificate 18, the certificate matcher component 20 will verify that the usage rights on the source certificates 8 allow the transaction on the target certificate 18, see also figure 4. Any violation is reported to the source stream contributors. The information in the source certificates 8 should allow the certificate matcher component 20 to trace the chain of contributing producers. According to one embodiment the certificates of a target stream contain the transaction data of all the previous transactions in the chain, but it is also possible to keep the transaction data of the previous transactions in a database in the central authority 100, so that the certificate matcher component 20 can trace the chain searching this database.

For keeping track of the watermarks there is provided a central watermark ID repository 50 where the watermark ID's of all the processing parties are kept.

Whenever a transaction occurs, a new certificate needs to be created. During this process, the party requesting the certificate needs to send the certificates of the previous multimedia streams acquired from third parties and used to generate the new stream subject of the transaction to the origin verifier component. At the same time the watermarks are extracted. According to a preferred method this consists in attempting a correlation with all the known watermark ID's , and forwarding watermarks that show sufficient correlation to the origin verifier component 30. Typically, every detected watermark should correspond to a source certificate. Watermarks not represented by a certificate are either false watermark triggers or evidence of illegal behavior on behalf of the party requesting the certificate. In such a case, the source stream contributors will be notified of this fact. A certificate not represented by a watermark is evidence that the watermark was not strong enough to survive the multimedia stream transformation applied by the party requesting the certificate. However, since this information is in the certificate, this is not really a problem. Clearly, the correlation operation mentioned higher can be performed at any time, allowing for an inspection of which parties contributed to a particular multimedia stream.

When a transaction occurs, the certificate matcher component 20 will be provided with the target certificate and the contributing source certificates of the streams used to generate the target stream. It will verify that this transaction is allowed taken care of the usage rights provided in the source certificates. Example given, if a source specifies mode_resell_N (see above), the N+1'th target transaction should not be accepted. The certificate matcher component 20 also plays an important role in the settlement process, since it can connect a target certificate to the relevant source certificates, and by this way identify the contributing parties by following the transaction chain, this is a chain of processor servers 3 finally arriving at the authors 1, 2 at the beginning of the chain.

The multimedia broker component 40 may further provide a catalogue functionality so that potential buyers can find interesting multimedia streams. It may also assist in the settlement process guaranteeing that all contributing parties get their share of the revenue resulting from a transaction. Since it is evident which party contributed what to the value of the final product, V.A.T. calculation can be done on a fine-grained level. The broker can further use metadata techniques and semantic technology to identify streams, wherein multimedia data of interest can e.g. be selected via tags/keywords etc. This will further give a new dimension to web 2.0 applications.

The different components 20, 30, 40, 50 used in the embodiment disclosed in the drawings are server components performing the different functionalities in an embodiment of the method of the invention. Note that those and other functionalities may be distributed over more or less components with more or less functions as will be understood by the skilled person. Further it is perfectly acceptable that the server functionality is distributed over several server instances. The only requirement on the multimedia broker component, the origin verifier component and the certificate matcher component is that parties must always use the same server instance over time, or that there must be provided a continuous update of the several server instances.

In the example of figure 1 author A and author B produce original content 2, which is sold in a transaction to processor C. For this transaction watermarks "A", "B" are added and certificates "A->C" and "B->C" are generated and added, respectively. Author B sells another instance of the original content with a distinct certificate "B->D" to processor D. Processor C merges the original content of author A and author B in a step 10, possibly adding own content 2. A watermark "C" and a certificate "C->E" are added and the result is sold in a transaction to consumer E. The watermarks "A", "B", and "C" of this result are proof (typically within a statistical uncertainty) that author A, author B and processor C contributed to the multimedia stream 19.

The "C->E" certificate 18 identifies processor C as the last actor working on the stream 19, and the matcher component 20 follows the transaction chain back to source certificates "B->C" and "A->C". The diagram of figure 2 illustrates how the "A->C" certificate is traced back to author A, which will receive it's fair share of the transaction launched by consumer E. Since the matcher component 20 for author A has no source certificates associated with the "A->C" transaction, the chain ends at author A (author A did not process a stream, but is an original source). A similar operation occurs on the "B->C" transaction. To avoid overloading of figure 2 with too much information this is not shown.

When processor C sells the stream, the source certificates "A->C" and "B->C", and detected watermarks "A" and "B" are forwarded to the verifier component 30 as illustrated in the diagram of figure 3. The verifier component 30 will inform author A and author B that their content 2 is being used in the sale of a derived multimedia stream 19. Since processor C played by the book and presented the "A->C" and "B->C" certificates, this information is also reported to author A and author B respectively. If processor C would not have presented the source certificates, the watermarks would have revealed that processor C was using content without presenting the associated certificates.

The transactions from C with respect to the derived content based on "A->C" and "B->C" are kept in the certificate matcher, and checked against the user right modes specified by "modeAC" and "modeBC", respectively. Any violation of the terms specified by "modeAC" or "modeBC" is reported to the respective owners author A or author B.

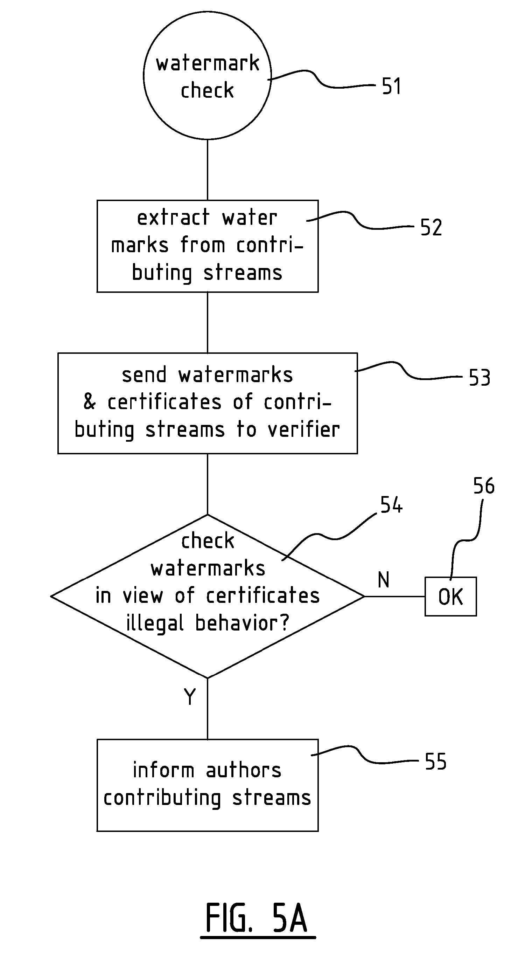

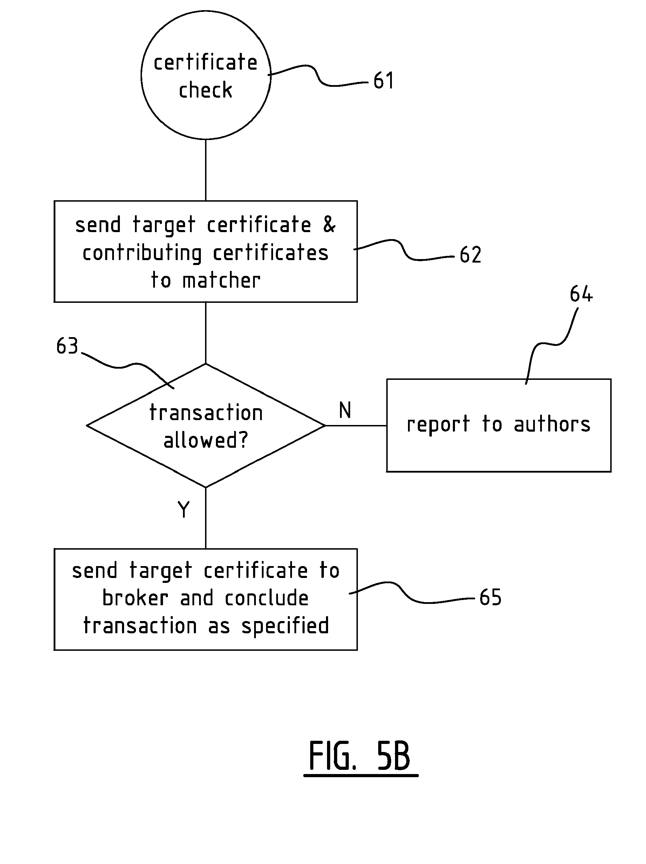

Finally figure 5(A) and (B) illustrate how illegal behavior/unallowed transactions may be traced and dealt with. It is noted that the method of the invention may according to a possible embodiment only include a certificate check (figure 5(B)) without the watermark check of figure 5 (A) .

In order to do the certificate check the desired target certificate and the contributing certificates are sent to the matcher of the central authority in step 62, and the matcher checks in step 63 whether the transaction is allowed taking into account the transaction data in the contributing certificates and any certificates of previous transactions which have lead to the contributing streams of the target stream. If it appears that the transaction is allowed, the target certificate is sent to the broker and the transaction is concluded as specified in the certificates (step 65). In this step the different authors are for example paid as specified. If the transaction is not allowed, this is reported to the authors (step 64). However, the skilled person will understand that it is also possible to take other actions.

For the watermark check (figure 5(B)) the watermarks are extracted from the contributing streams (step 52), and the extracted watermarks and certificates of the contributing streams are sent to the verifier of the central authority (step 53). In step 54 the verifier checks the watermarks in view of the information about the source in the certificates in order to detect any illegal behavior.
If one of the watermarks cannot be found in the certificates, the author associated with the watermark is informed accordingly. Note that any known technique may be used to find the author/processor servers and to communicate amongst the different servers involved.

The method of the invention may e.g. be implemented as a client-server architecture where a suitable server component is downloadable to the client. However the skilled person will understand that many other implementations are possible.

While the principles of the invention have been set out above in connection with specific embodiments, it is to be clearly understood that this description is merely made by way of example and not as a limitation of the scope of protection which is determined by the appended claims.

## Claims

1. Method for performing transactions on multimedia streams being produced over a chain of contributing producers in a ICT network environment, wherein for every transaction from one party to another party a target multimedia stream is generated with a number of contributing streams, **characterized in that** for every intended transaction of a target multimedia stream digital transaction data for said transaction is generated and associated with the target multimedia stream, wherein the digital transaction data of every transaction is managed centrally in the ICT network environment so that the chain of contributing producers can be traced.

2. Method according to claim 1, wherein the contributing streams have respective digital transaction data included during respective previous transactions,
**characterized in that**
it is centrally verified whether a transaction of a target multimedia stream is allowed, taking into account the respective digital transaction data of the contributing streams.

3. Method according to claim 1, **characterized in that** the digital transaction data associated with stream is unique and comprises at least:
- an identifier of said one party;
- an identifier of the target multimedia stream;
- an identifier of said other party;
- user right data specifying the rights of using the target multimedia stream in subsequent transactions.

4. Method according to claim 1, wherein the contributing streams have respective digital transaction data included during respective previous transactions, **characterized in that** the digital transaction data of the target multimedia stream further comprises the respective digital transaction data of the contributing streams.

5. Method according to claim 1, wherein the digital transaction data comprises payment information for any further use of the target multimedia stream, **characterized in that** for every intended transaction of a target multimedia stream the respective digital transaction data of the contributing streams are sent to the central authority, and the central authority ensures that the producers of the contributing streams are paid as specified in the respective digital transaction data.

6. Method according to claim 1, **characterized in that** for every intended transaction of a target multimedia stream from one party to another party a watermark identifying said one party is included in the target multimedia stream.

7. Method according to claim 6, **characterized in that** for every intended transaction of a target multimedia stream using a number of contributing streams with respective digital watermarks and transaction data included during previous transactions, the respective digital watermarks and transaction data of the contributing streams are verified, and the producers of the contributing streams are informed accordingly.

8. Transaction preparation module for use in performing transactions on multimedia streams being produced over a chain of contributing producers in an ICT network environment, **characterized in that** the module is adapted for preparing for every transaction a target multimedia stream from a number of contributing streams, for generating digital transaction data and for associating said digital transaction data with said target multimedia stream.

9. Transaction preparation module according to claim 8, **characterized in that** the module is further adapted for generating unique digital transaction data including at least user right data specifying the rights of using the target multimedia stream in subsequent transactions.

10. Transaction preparation module according to claim 9, **characterized in that** the module is further adapted for generating digital transaction data further comprising:
- an identifier of said one party;
- an identifier of the target multimedia stream;
- an identifier of said other party.

11. Transaction preparation module according to claim 8, **characterized in that** the module is further adapted to include for every transaction of a target multimedia stream from one party to another party a watermark identifying said one party in the target multimedia stream.

12. Central management module comprising one or more servers for managing transactions on multimedia streams being produced over a chain of contributing producers, **characterized in that** the central management module is adapted for managing digital transaction data of every transaction so that the chain of contributing producers can be traced.

13. Central management module according to claim 12, **characterized in that** the central management module is further adapted for verifying whether the transaction is allowed taking into account the respective digital transaction data from the number of contributing streams and for informing the producers accordingly.

14. Central management module according to claim 13, wherein the digital transaction data comprises payment information for any further use of the target multimedia stream, **characterized in that** the central management module is further adapted for ensuring that the producers of the contributing streams are paid as specified in the respective digital transaction data of the contributing streams.

15. System for performing transactions on multimedia streams being produced over a chain of contributing producers in an ICT network environment, comprising a transaction preparation module according to any of the claims 8-12 and a central management module according to any of the claims 13-15.

## Amended claims

### Amended claims in accordance with Rule 137(2) EPC.

**1.** Method for performing transactions on multimedia streams being produced over a chain of contributing producers in a ICT network environment, wherein for every transaction from one party to another party a target multimedia stream is generated with a number of contributing streams, **characterized in that** for every transaction digital transaction data for said transaction is generated and associated with the target multimedia stream, wherein the digital transaction data of every transaction is managed centrally in the ICT network environment so that the chain of contributing producers can be traced.

**2.** Method according to claim 1, wherein the contributing streams have respective digital transaction data included during respective previous transactions,
**characterized in that**
it is centrally verified whether a transaction of a target multimedia stream is allowed, taking into account the respective digital transaction data of the contributing streams.

**3.** Method according to claim 1, **characterized in that** the digital transaction data associated with stream is unique and comprises at least:
- an identifier of said one party;
- an identifier of the target multimedia stream;
- an identifier of said other party;
- user right data specifying the rights of using the target multimedia stream in subsequent transactions.

**4.** Method according to claim 1, wherein the contributing streams have respective digital transaction data included during respective previous transactions, **characterized in that** the digital transaction data of the target multimedia stream further comprises the respective digital transaction data of the contributing streams.

**5.** Method according to claim 1, wherein the digital transaction data comprises payment information for any further use of the target multimedia stream, **characterized in that** for every intended transaction of a target multimedia stream the respective digital transaction data of the contributing streams are sent to the central authority, and the central authority ensures that the producers of the contributing streams are paid as specified in the respective digital transaction data.

**6.** Method according to claim 1, **characterized in that** for every intended transaction of a target multimedia stream from one party to another party a watermark identifying said one party is included in the target multimedia stream.

**7.** Method according to claim 6, **characterized in that** for every intended transaction of a target multimedia stream using a number of contributing streams with respective digital watermarks and transaction data included during previous transactions, the respective digital watermarks and transaction data of the contributing streams are verified, and the producers of the contributing streams are informed accordingly.

**8.** Transaction preparation module for use in performing transactions on multimedia streams being produced over a chain of contributing producers in an ICT network environment, **characterized in that** the module is adapted for preparing for every transaction a target multimedia stream from a number of contributing streams, for generating digital transaction data and for associating said digital transaction data with said target multimedia stream.

**9.** Transaction preparation module according to claim 8, **characterized in that** the module is further adapted for generating unique digital transaction data including at least user right data specifying the rights of using the target multimedia stream in subsequent transactions.

**10.** Transaction preparation module according to claim 9, **characterized in that** the module is further adapted for generating digital transaction data further comprising:
- an identifier of said one party;
- an identifier of the target multimedia stream;
- an identifier of said other party.

**11.** Transaction preparation module according to claim 8, **characterized in that** the module is further adapted to include for every transaction of a target multimedia stream from one party to another party a watermark identifying said one party in the target multimedia stream.

**12.** Central management module comprising one or more servers for managing transactions on multimedia streams being produced over a chain of contributing producers, wherein for every transaction from one party to another party a target multimedia stream is generated with a number of contributing streams, **characterized in that** the central management module is adapted for managing digital transaction data included in every target multimedia stream, so that the chain of contributing producers can be traced.

**13.** Central management module according to claim 12, **characterized in that** the central management module is further adapted for verifying whether the transaction is allowed taking into account the respective digital transaction data from the number of contributing streams and for informing the producers accordingly.

**14.** Central management module according to claim 13, wherein the digital transaction data comprises payment information for any further use of the target multimedia stream, **characterized in that** the central management module is further adapted for ensuring that the producers of the contributing streams are paid as specified in the respective digital transaction data of the contributing streams.

**15.** System for performing transactions on multimedia streams being produced over a chain of contributing producers in an ICT network environment, comprising a transaction preparation module according to any of the claims 8-12 and a central management module according to any of the claims 13-15.
